## Europäisches Patentamt

## European Patent Office

## Office européen des brevets

(19)

(11) Veröffentlichungsnummer: **0 082 262 B1**

(12) **EUROPÄISCHE PATENTSCHRIFT**

(45) Veröffentlichungstag der Patentschrift:
26.02.86

(51) Int. Cl.⁴: **B 01 D 53/34**

(21) Anmeldenummer: **82109460.4**

(22) Anmeldetag: **13.10.82**

(54) **Verfahren zum Schutz von Katalysatoren für die Reinigung der Abgase von mit verbleiten Kraftstoffen betriebenen Verbrennungskraftmaschinen.**

(30) Priorität: **20.11.81 DE 3146004**

(43) Veröffentlichungstag der Anmeldung:
**29.06.83 Patentblatt 83/26**

(45) Bekanntmachung des Hinweises auf die Patenterteilung:
**26.02.86 Patentblatt 86/9**

(84) Benannte Vertragsstaaten:
**DE FR IT**

(56) Entgegenhaltungen:
**DE - A - 2 349 754**
**DE - A - 2 624 686**
**DE - B - 1 212 504**
**US - A - 3 227 659**

(73) Patentinhaber: **Degussa Aktiengesellschaft,
Weissfrauenstrasse 9, D-6000 Frankfurt am Main 1 (DE)**

(72) Erfinder: **Bozon, Alfred, Beethovenstrasse 15,
D-6451 Erlensee (DE)**
Erfinder: **Koberstein, Edgar, Dr., Wolfskernstrasse 8,
D-8755 Alzenau (DE)**
Erfinder: **Pletka, Hans-Dieter, Dr., Im
Schwalbengrund 20, D-6463 Freigericht I (DE)**
Erfinder: **Völker, Herbert, Bogenstrasse 43,
D-6450 Hanau 11 (DE)**

LIBER, STOCKHOLM 1986

## Beschreibung

Die Erfindung betrifft allgemein ein Verfahren zum Schutz von Katalysatoren für die Reinigung der Abgase von mit verbleiten Kraftstoffen betriebenen Verbrennungskraftmaschinen. Die Katalysatoren werden üblicherweise im Strömungsquerschnitt eines im Auspuffkanal eines Kraftfahrzeugs angeordneten Gehäuses beliebiger Bauart mit Zufluß-und Abströmkanal für das Abgas, angeordnet.

Bei der katalytischen Reinigung von Motorabgasen begegnet man dem Problem, daß die meisten Katalysatoren, insbesondere Edelmetall-Katalysatoren, in ihrer Wirksamkeit beeinträchtigt werden, wenn die zum Betrieb des Motors verwendeten Kraftstoffe verbleit sind. Bei Edelmetall-Katalysatoren, wie einem Platin und Rhodium enthaltenden System, bewirkt ein Bleigehalt des Abgases über längere Betriebszeiten u. a. eine Verschlechterung der Kohlenwasserstoff-Konvertierung. Auch die Konvertierung anderer Schadstoffe wird beeinträchtigt. Neben einem deutlich feststellbaren Rückgang des CO-Umsatzes wird insbesondere der (NO$_x$)-Umsatz betroffen.

Es ist vorgeschlagen worden, zur Entfernung von Blei aus Motorabgasen sogenannte Bleifilter, bestehend aus einer Stahlwolle-Packung, beschichtet mit Alkalimetallphosphaten und -carbonaten, zu verwenden. Solche bisher nicht in Verbindung mit Katalysatoren verwendeten Einrichtungen dieten ausschließlich zur Herabsetzung der Bleiemission in die Umgebungsluft.

Einer Anwendung solcher Einrichtungen im Zusammenwirken mit Katalysatoren stehen jedoch folgende Nachteile entgegen: Die Einrichtungen müssen ein relativ großes Volumen besitzen, um ausreichende Abscheidegrade zu erreichen; ihr Gewicht ist dadurch entsprechend hoch. Um ein Abdampfen von akkumulierten Bleiverbindungen aus dem Filter zu vermeiden, muß dieses an einer relativ kühlen Stelle des Abgassystems angebracht werden. Die hier vorherrschenden Temperaturen sind für den Betrieb eines Katalysators zu niedrig.

Aus der US-A- 3 227 659 ist bereits ein Verfahren zum Schutz von Katalysatoren für die Reinigung der Abgase von mit verbleiten Kraftstoffen betriebenen Verbrennungskraftmaschinen bekannt, bei dem die Abgase, ehe sie mit dem Katalysator in Berührung kommen, mit Alkalimetall- oder Erdalkalimetallphosphat, insbesondere Natriumdihydrogenphosphat oder Dinatriumhydrogenphosphat, aufgetragen auf einem Aluminiumoxidfilm, der seinerseits auf einem nicht porösem Träger aufgebracht ist, in Berührung gebracht werden. Die genannte Patentschrift erwähnt, daß bei Imprägnierung des Aluminiumoxidfilms mit Phosphorsäure die entstehende Phosphatablagerung durch das Abgas unter den hohen, in Abgassystemen herrschenden Temperaturbedingungen allzuleicht von dem Träger weggefegt wird, so daß man letztlich stattdessen nur saure Alkali- oder Erdalkalimetallphosphate einsetzt, welche besser als Phosphorsäure auf dem Aluminiumoxidfilm zurückgehalten werden.

Die DE-B- 12 12 504 beschreibt ein Verfahren zur Herstellung von als Katalysatorträger geeigneten sphärischen Körnern bestimmter Abmessungen durch Umsetzung von Aluminiumhydroxid mit Phosphorsäure zu Aluminiumphosphat AlPO$_4$, wobei dieses im Träger als Bindemittel wirkt. Der Träger kann nach Aufbringen eines katalytisch aktiven Metalls zur Oxidation z. B. von Auspuffgasen von mit gebleitem Benzin angetriebenen Verbrennungskraftmaschinen verwendet werden. Die genannte Schrift befaßt sich nicht mit Schutzsystemen für Katalysatoren.

Gegenstand der Erfindung ist ein Verfahren zum Schutz von Katalysatoren für die Reinigung der Abgase von mit verbleiten Kraftstoffen betriebenen Verbrennungskraftmaschinen durch Inberührungbringen der Abgase, ehe sie mit dem Katalysator in Berührung kommen, mit einem Phosphat oder einem dieses enthaltenden temperaturbeständigen oxidischen Trägermaterial, wobei das Phosphat bzw. das Phosphat mit dem Trägermaterial in Form einer aus einer Dispersion gebildeten Beschichtung auf einem Trägerkörper vorliegt.

Dieses auf dem Verfahren der US-A- 3 227 659 basierende Verfahren ist dadurch gekennzeichnet, daß als Phosphat Aluminiumphosphat verwendet wird.

Für die Aufnahme bzw. Halterung des zum Schutz eines Katalysators bestimmten Stoffs bzw. Stoffsystems kommen, je nach dessen Raumform, an sich bekannte Gehäuseausführungen in Frage, bei denen Zufluß- und Abströmkanal für das Abgas so angeordnet sind, daß ein möglichst inniger Kontakt zwischen Abgas und Wirkstoff gewährleistet ist.

Im einfachsten Fall wird das Phosphat granuliert oder zu Tabletten oder Strangpresslingen verpreßt, in Form eines Schüttbetts, welches durch die Teilchenform und -dimensionierung entsprechend gasdurchlässig eingestellt werden kann, eingesetzt. Demgemäß betrifft die Erfindung auch ein Verfahren zum Schutz von Katalysatoren für die Reinigung der Abgase von mit verbleiten Kraftstoffen betriebenen Verbrennungskraftmaschinen durch Inberührungbringen der Abgase, ehe sie mit dem Katalysator in Berührung kommen, mit Aluminiumphosphat oder einem dieses enthaltenden temperaturbeständigen oxidischen Trägermaterial in Form eines Granulats oder Preßlings. Das Aluminiumphosphat kann also mit einem Trägermaterial höherer Oberfläche, wie Aluminiumoxid der Übergangsreihe, SiO$_2$, Aluminiumsilikat, TiO$_2$, ZrO$_2$, einem Oxid der Seltenen Erden oder Mischungen vorstehender Stoffe abgemischt sein. Dabei werden zwischen dem Phosphat und dem Trägermaterial Mischungen im Bereich von 10: 90 bis 90: 10, vorzugsweise 80: 20 bis 50: 50 Gewichtsteilen bevorzugt.

Anstelle von Granulaten oder Preßlingen kann auch ein mit Aluminiumphosphat und gegebenenfalls einem temperaturbeständigen oxidischen Trägermaterial beschichteter Trägerkörper aus keramischem Material oder aus temperatur- und korrosionsbeständigem Metall oder einer Metall-Legierung mit diesen Eigenschaften, wie er in der Katalysatortechnik als struktureller Verstärker bezeichnet wird, verwendet werden. Er ist erhältlich, indem man den in beliebiger Weise geformten Trägerkörper aus inertem Material, z. B. Cordierit, Mullit, $\alpha$ -Al$_2$O$_3$ oder auch aus $\gamma$ -Al$_2$O$_3$ oder aus temperatur- und korrosionsbeständigem Metall bzw. einer Metall-Legierung mit diesen Eigenschaften, wie z. B. einem Aluminium enthaltenden Chromstahl, welcher seinerseits mit einer oberflächenvergrößernden Metalloxidschicht, vorzugsweise einem Aluminiumoxid der Übergangsreihe oder SiO$_2$, Aluminiumsilikat, TiO$_2$, ZrO$_2$, einem Oxid der Seltenen Erden oder Mischungen vorstehender Stoffe überzogen sein kann, durch Tauchen in eine Dispersion des Phosphats bzw. der Abmischung eines oxidischen Trägermaterials mit dem Phosphat beschichtet, den beschichteten Trägerkörper trocknet und gegebenenfalls tempert.

Der bei den bisher üblichen Bleifiltern nachteilige hohe Raumbedarf für die Unterbringung der Adsorbereinheit am Kraftfahrzeug kann nach einer besonders günstigen Variante der Erfindung dadurch wesentlich gesenkt werden, daß der Trägerkörper in Form einer längs- und/oder querdurchströmbaren Metallmatrix oder eines keramischen Monolithen mit entsprechender Durchströmbarkeit ausgebildet ist.

Diese Trägerkörper können also so ausgebildet sein, daß in ihnen neben einer Längsströmung auch Querstromeffekte auftreten. Dazu werden entweder die Kanalwandungen der Keramikmonolithe porös ausgebildet oder die der Metallmatrizen durch die Verwendung bzw. teilweise Verwendung von Siebgewebe in radialer Richtung gasdurchlässig gemacht. Keramikmonolithe wie Metallmatrizen können, wie erwähnt, in üblichen Gehäusen gehaltert werden. Bei Metallmatrizen besteht darüber hinaus die Möglichkeit, sie in einem enganliegenden verstärkenden Stahlmantel zu befestigen und diese Kombination in die Auspuffleitung eines Kraftfahrzeugs einzuschweißen, wobei an den Stirnseiten am Stahlmantel An- und Abströmkonen vorgesehen sein können.

Eine Ausführungsform der Erfindung sieht vor, daß das Aluminiumphosphat bzw. das Aluminiumphosphat mit dem Trägermaterial auf der katalytisch aktiven Beschichtung eines Katalysators, vorzugsweise eines Trägerkatalysators, aufgebracht ist.

Nach dieser Ausführungsform soll also die Schutzschicht die gesamte katalytisch aktive Beschichtung des Katalysators abdecken. Mit der Schutzschicht können alle an sich bekannten Katalysatorsysteme ausgerüstet werden. So kann der Katalysator über seinen gesamten Querschnitt aus katalytisch aktiver Masse oder aus einer Abmischung von dieser und einem sogenannten Interspersant, wie Tonerde, bestehen. Er kann aber auch durch Tränken eines Trägers mit Salzlösungen der aktiven Metalle und oxidatives und/ oder reduktives Calcinieren hergestellt sein, wobei der Träger, meist ein oberflächenvergrößerndes Metalloxid, seinerseits, z. B. als Washcoat, auf einem katalytisch inerten strukturellen Verstärker aus Keramik oder Metall oder Siliciumcarbid o. ä. in Form eines beliebig gestalteten Körpers, eines Monolithen bzw. einer gasdurchströmbaren Matrix aus Blech und/oder Siebgewebe, angeordnet sein kann.

Eine Variante davon sieht dagegen vor, daß das Aluminiumphosphat bzw. das Aluminiumphosphat mit dem Trägermaterial nur in einem vom Abgas angeströmten vorderen Abschnitt des Katalysators aufgebracht ist.

Davon abweichend kann das Aluminiumphosphat bzw. das Aluminiumphosphat mit dem Trägermaterial in einem vom Abgas angeströmten, aber von katalytisch aktiver Beschichtung freigehaltenen und gegebenenfalls mit einer oberflächen-vergrößernden Metalloxidschicht überzogenen vorderen Abschnitt eines gegebenenfalls mehrteiligen strukturellen Verstärkers in Form einer Metallmatrix oder eines Keramikmonolithen aufgebracht sein. Hier trägt also nur der hintere Abschnitt des Trägers bzw. des Trägersystems eine katalytisch aktive Beschichtung.

Im einfachsten Falle ordnet man hierzu in einem einzigen Gehäuse einen strukturellen Verstärker mit dem phosphatschutzsystem vor einem gleichartigen Verstärker mit Katalysatorsystem so an, daß die einander zugekehrten Stirnflächen unmittelbar aufeinanderstoßen.

In manchen Fällen werden, wie erwähnt, solche zwei- oder mehrteilig vorzusehenden Schutzsystem/Katalysatorsystem-Sequenzen innerhalb eines gemeinsamen Gehäuses im Abstand voneinander angeordnet, wobei die Schutzwirkung nicht beeinträchtigt wird.

Eine andere Art der Herstellung kann darin bestehen, daß z. B. ein Monolith zuerat durch Tauchen in eine Dispersion des Schutzsystema über eine gewisse Strecke, z. B. 50 % der Länge, mit diesem beschichtet wird und derselbe Monolith nach Fixierung der Schutzachicht durch Erhitzen auf z. B. 300° C, gedreht und von der anderen Seite bis zur Mitte durch Tauchen und Weiterverarbeitung in an sich bekannter Weise, mit einer Katalysatormasse versehen wird. Der Herstellungsgang kann natürlich auch in umgekehrter Reihenfolge stattfinden.

Eine weitere sehr günstige Ausführungsform des erfindungs-gemäßen Verfahrens besteht darin, daß man die Abgase durch ein erstes, mit Zu- und Abströmkanal für das Abgas ausgerüstetes Gehäuse führt, in dessen Strömungsquerschnitt eines der vorgesehenen Katalysatorschutzsysteme bzw. ein damit ausgerüsteter Katalysator angeordnet ist und sie an-schließend durch ein entsprechend ausgebildetes zweites Gehäuse führt, in dessen Strömungsquerschnitt ein Abgasreinigungskatalysator angeordnet ist. Der Katalysator im zweiten Gehäuse kann die phosphathaltige Schutzschicht auf der gesamten aktiven Beschichtung tragen. Bei Katalysatoren, welche auf einem keramischen Monolithen oder auf einer Metallmatrize aufgebracht sind, kann die Schutzschicht auch auf einen vorderen Abschnitt begrenzt sein oder es kann ein vorderer, von Katalysatormaterial freigehaltener oder nur von einer oberflächenvergrößernden Metalloxidschicht bedeckter Abschnitt mit dem Phosphatschutz überzogen sein.

Der mit der Erfindung erzielbare Vorteil besteht insbesondere darin, daß erfindungsgemäß geschützte Katalysatoren bei den erforderlichen hohen Temperaturen unter Verbesserung ihrer Dauerstandaktivität mit Abgasen aus bleibenzingespeisten Verbrennungskraftmaschinen betrieben werden können.

Der Wirkungsmechanismus des erfindungsgemäßen Katalysatorschutzes ist noch nicht aufgeklärt, jedoch wird angenommen, daß überwiegend diejenigen im Abgasstrom enthaltenen, bei den Betriebstemperaturen der katalytischen Abgasreinigung flüchtigen Verbindungen unschädlich gemacht werden, welche in den Katalysator eindringen und aktive Zentren desselben vergiften können. Dazu sind wahrscheinlich Bleioxide, Bleihalogenide, Bleioxihalogenide, freie Halogene sowie Halogenverbindungen, wie z. B. HBr, zu rechnen.

Die Erfindung wird nachfolgend anhand von Ausführungabeispielen in Verbindung mit der Zeichnung näher erläutert. In dieser zeigen

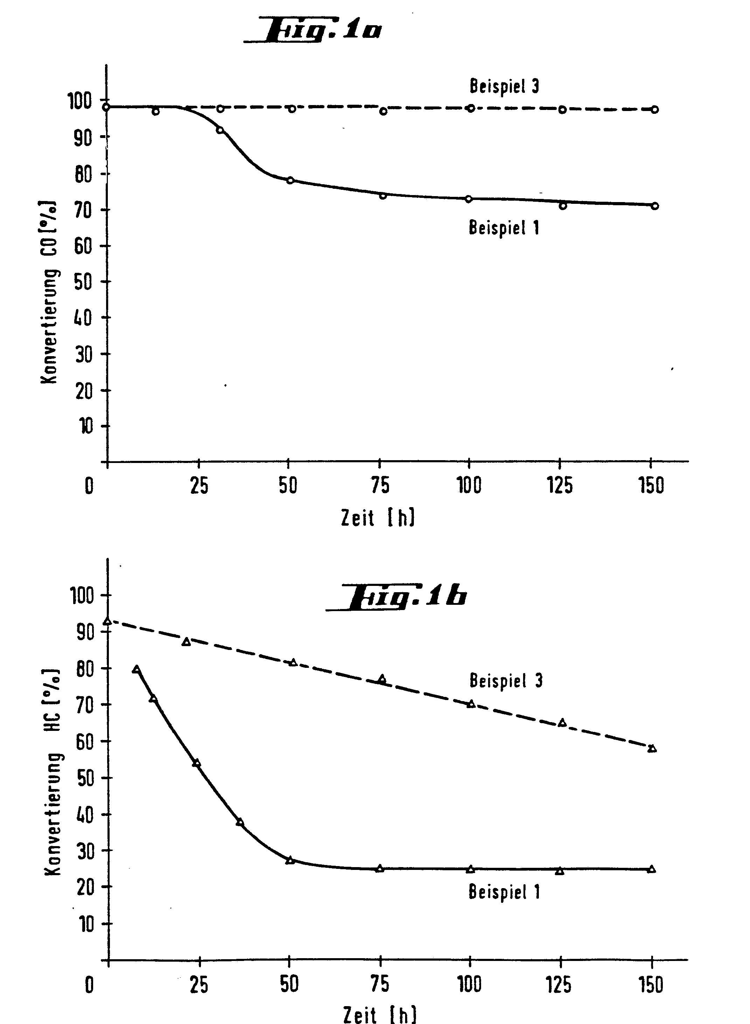

Fig. 1 a die Konvertierungskurven für CO (Fig. 1a) und
und HC (Fig. 1b) über 150 h des Katalysators nach

Fig. 1 b Beispiel 1 und eines erfindungsgemäß geschützten Katalysators nach Beispiel 3 (jeweils Metallträgermatrix);

Fig. 2 a die Konvertierungskurven für CO (Fig. 2a) und
und HC (Fig. 2b) über 150 h des Katalysators nach

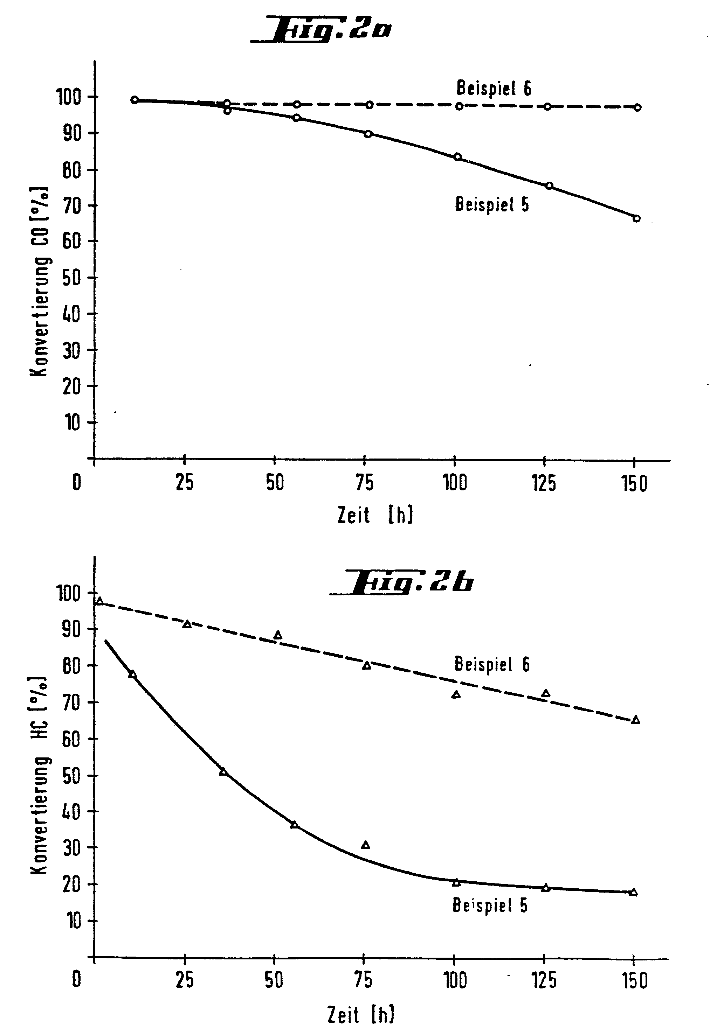

Fig. 2 b Beispiel 5 und eines erfindungsgemäß geschützten Katalysators nach Beispiel 6 (jeweils wabenförmiger Keramikmonolith).

**Beispiel 1**

Ein wabenförmiger struktureller Verstärker aus einer hochtemperaturfesten, zunderbeständigen, Eisen, Aluminium und Chrom enthaltenden Metallegierung nach DIN W. Nr. 1.4725 mit 93 Zellen pro $cm^2$, einem Volumen von 0,967 $dm^3$ und einer Länge von 120 mm wurde zur Schaffung einer verankerungsgünstigen Oberfläche an Luft 3 Stunden bei 950° C erhitzt.

Der so vorbereitete Verstärker wurde mit einer 40 Gew.%igen wäßrigen Dispersion von gamma-Aluminiumoxid mehrfach durchspült, zwischen den einzelnen Spülvorgängen bei 250° C getrocknet und dabei insgesamt mit Z6D g $Al_2O_3$ belegt.

Im Anschluß daran erfolgte eine einstündige Temperung bei 700° C. Nach dem Abkühlen wurde der mit dem Trägermaterial beschichtete metallische Verstärker so mit einer wäßrigen Lösung von Cer(III)-Nitrat (66,7 g/l) und Zirkonnitrat (191 1 g/l) behandelt, daß nach Trocknung und Temperung bei 700° C 10 g $CeO_2$ und 12,5 g $ZrO_2$ in der $Al_2O_3$-Be-schichtung verblieben. Danach wurde der beschichtete Verstärker durch Tauchen in eine wäßrige Edelmetallösung, welche 27,8 g Platin pro Liter in Form von $H_2PtCl_6$ enthielt, mit insgesamt 2,39 g Pt imprägniert, getrocknet, Z Stunden bei 600° C im Muffelofen getempert und das Platin anschließend 2 Stunden im Wasserstoffstrom bei 550° C reduziert.

**Beispiel 2**

250 g $\gamma$ -$Al_2O_3$ mit einer spezifischen Oberfläche von ca. 130 $m^2/g$ wurden zusammen mit 750 g basischem Aluminiumphosphat (Merck Nr. 1098) in 3 $dm^3$ Wasser eingerührt und anschließend 24 Stunden in einer Kugelmühle gemahlen. Nach dieser Zeit ergibt sich eine gebrauchsfertige Dispersion für die Herstellung erfindungagemäß bleigeschützter Katalysatoren.

**Beispiel 3**

Einem nach Beispiel 1 hergestellten und in einem Gehäuse mit Zufuhr- und Abfuhrkanal untergebrachten Katalysator wurde in einem weiteren Gehäuse ein mit einer Mischung aus /$\gamma$ -$Al_2O_3$ und Aluminiumphosphat (Gew.-Verhältnis 1: 3) des Beispiels 2 beschichteter metallischer Trägerkörper gleicher Dimension wie der strukturelle Verstärker des Katalysators vorgeschaltet. Die Beschichtung dieses Trägerkörpers nach Schaffung einer verankerungsgünstigen Oberfläche durch Glühen an Luft erfolgte durch Tauchen in eine 40 Gew.%ige wäßrige $\gamma$ -$Al_2O_3$-Dispersion unter Aufnahme von 50 g $Al_2O_3$ und nachfolgendea Trocknen bei 250° C sowie darauffolgendes mehrfaches Durchspülen mit der $\gamma$ -$Al_2O_3$/ Aluminiumphosphat-Dispersion nach Beispiel 2, wobei zwischen den einzelnen Spülvorgängen jeweils bei 250° C getrocknet wurde. Die Gesamtaufnahme an $\gamma$ -$Al_2O_3$/Aluminium-phosphat-Gemisch betrug 250 g.

**Beispiel 4**

Die Katalysatorsysteme nach den Beispielen 1 und 3 wurden unter folgenden Bedingungen mit Autoabgas gealtert und auf ihre Funktionsfähigkeit bezüglich CO- und HC-Konvertierung getestet:
- 4-Zylinder-Motor, wassergekühlt

4

0 082 262

Hubvolumen: 1.6 dm$^3$
Leistung: 58 kW
Gemischbildung: K-Jetronic
- Motorlastpunkt: 3000 UPM, 90 N
- Kraftstoff: 0,4 g Pb/dm$^3$, Motormix
- Raumgeschwindigkeit:
a) 94 000 h-1 für Bsp. 1 (Katalysator)
b) 94 000 h-1 für Bsp. 3 (Vorschalteinheit)
94 000 h $^1$ für Bsp. 3 (Katalysator)
- Alterungszeit: 150 h abwechselnd bei einer periodisch zwischen 400° C ($\lambda$ = 1.02) und 560° C ($\gamma$ = 0.995) geänderten Abgastemperatur.

Oie Konvertierung von CO und HC der beiden zu vergleichenden Katalysatorsysteme wurde in bestimmten Zeitintervallen bei $\lambda$ = 1.02 und 560° C Abgastemperatur ermittelt. Die Ergebnisse sind in folgender Tabelle und in Fig. 1 enthalten.

**Tabelle 1**

| Alterungszeit | Katalysator nach Beispiel | | | |
|---|---|---|---|---|
| | 1 | | 3 | |
| [h] | % CO | % HC | % CO | % HC |
| 0 | 98 | 93 | 98 | 93 |
| 25 | 97 | 54 | 98 | 87 |
| 50 | 78 | 27 | 98 | 82 |
| 75 | 74 | 25 | 97 | 77 |
| 100 | 73 | 25 | 98 | 70 |
| 125 | 72 | 24 | 98 | 65 |
| 150 | 71 | 25 | 98 | 58 |

Wie aus den erhaltenen zeitabhängigen Konvertierungskurven zu ersehen ist, verbleibt bei Vorschaltung eines Aluminiumphosphat-haltigen Schutzsystems vor einen Edelmetallkatalysator nach einer Alterungszeit von 150 h mehr als die doppelte HC-Konvertierung des ungeschützten Katalysators. Die CO-Konvertierung verändert sich über diesen Zeitraum überhaupt nicht, wogegen sie beim ungeschützten Katalysator auf 75 % absinkt.

**Beispiel 5**

Ein struktureller, wabenförmiger Verstärker aus Cordierit mit 62 Zellen pro cm$^2$, einem Volumen von 1,352 dm$^3$ und einer Länge von 152 mm wurde wie in Beispiel 1 mit insgesamt 360 g $\gamma$ -Al$_2$O$_3$, 13,5 g CeO$_2$ und 16,9 g ZrO$_2$ beschichtet und anschließend mit einer wäßrigen Lösung von H$_2$PtCl$_6$, entsprechend 3,34 g Pt imprägniert, getrocknet und der erhaltene Rohkatalysator im H$_2$-Strom bei 550° C 2 Stunden reduziert.

**Beispiel 6**

Ein wabenförmiger Trägerkörper aus Cordierit mit 31 Zellen/ cm$^2$, einem Volumen von 0,676 dm$^3$ und einer Länge von 75 mm mit dem gleichen Querschnitt wie der strukturelle Verstärker des Katalysators aus Beispiel 5 wurde mit der $\gamma$ -Al$_2$O$_3$ /Aluminiumphosphat-Dispersion des Beispiels 2 beschichtet. Die Beschichtung erfolgte durch mehrfaches Durchspülen mit der Dispersion, wobei zwischen den einzelnen Spülvorgängen jeweils bei

5

# 0 082 262

250° C getrocknet wurde. Die Gesamtaufnahme an γ-Al$_2$O$_3$/Aluminiumphosphat-Gemisch betrug 170 g. Der so präparierte Trägerkörper wurde in einem separaten Gehäuse mit Zu- und Abströmkanälen für das Abgas dem Katalysators des Beispiels 5 zum Schutz gegen Vergiftung vorgeschaltet. Der Katalysator war in einem entsprechenden Gehäuse angeordnet.

## Beispiel 7

Die Katalysatorsysteme der Beispiele 5 und 6 wurden entsprechend dem Beispiel 4 unter folgenden abgeänderten Bedingungen auf ihre Funktionsfähigkeit bezüglich CO- und HC-Konvertierung getestet:
- Raumgeschwindigkeit:
a) 67 000 h-1 für Bsp. 5 (Katalysator)
b) 134 000 h-1 für Bsp. 6 (Vorschalteinheit)
67 000 h-1 für Bsp. 6 (Katalysator)
- Alterung: Abgastemperatur in Intervallen von jeweils 1 Minute wechselnd zwischen 480° C und 640° C; λ = 1 (konstant)
Die Konvertierung von CO und HC wurde in bestimmten Zeitintervallen bei λ = 1,02 und einer Abgastemperatur von 650° C ermittelt. Die Ergebnisse sind in folgender Tabelle 2 und in Figur 2 enthalten.

## Tabelle 2

| Alterungszeit | Katalysator nach Beispiel | | | |
| | 5 | | 6 | |
| [h] | % CO | % HC | % CO | % HC |
|---|---|---|---|---|
| 0 | 99 | 90 | 99 | 97 |
| 25 | 98 | 61 | 99 | 91 |
| 50 | 95 | 40 | 98 | 88 |
| 75 | 90 | 30 | 98 | 80 |
| 100 | 84 | 21 | 98 | 72 |
| 125 | 76 | 19 | 98 | 72 |
| 150 | 67 | 19 | 98 | 65 |

Wie schon in Beispiel 4 festgestellt, ist auch hier der erfindungsgemäß geschützte Katslysator dem ungeschützten Katalysator überlegen.

## Beispiel 8

Es wurde ein erfindungsgemäßer Katalysatorschutz wie in Beispiel 6 hergestellt und mit einem nach dem Verfahrensgang des Beispiels 5 hergestellten Katalysator kombiniert. Als aktive Katalysatorbeschichtung wurde jedoch eine Mischung aus Platin/Rhodium im Gewichtsverhältnis 8,5 : 1 verwendet, welche folgendermaßen erhalten wurde: Der wabenförmige strukturelle Verstärker aus Cordierit wurde wie in Beispiel 1 mit insgesamt 360 g γ-Al$_2$O$_3$, 13,5 g CeO$_2$ und 16,9 g ZrO$_2$ beschichtet und anschließend durch Tauchen in eine wäßrige Edelmetallösung, welche 53,53 g Hexachloroplatinsäure (25,46 g Pt) und 4,76 g Rhodium(III)-chlorid (2,34 g Rh) pro Liter Wasser enthielt, mit 2,99 g Platin und 0,35 g Rhodium imprägniert. Sodann wurde bei 250° C getrocknet und der Rohkatalysator im Wasserstoffstrom bei 550° C 1,5 Stunden reduziert.
Die anwendungstechnische Prüfung des durch Vorschalten des Phosphatsystems nach Beispiel 6 geschützten Katalysators entsprechend dem Beispiel 7 ergab im Vergleich mit dem ungeschützten Katalysator das genasu

6

gleiche Ergebnis wie in Tabelle 2 und Figur 2 gezeigt.

**Beispiel 9**

Entsprechend Beispiel 2 wurde eine Dispersion mit verschiedenen $\gamma$-$Al_2O_3$/Aluminiumphosphat-Mischungsverhältnissen hergestellt und keramische Trägerkörper aus Cordierit-Monolithwaben von 120 mm Länge und 3B mm Durchmesser (62 Zellen(cm$^2$) mit jeweils 250 g Gemisch/dm$^3$ Verstärkervolumen beschichtet:
a) 75 Gew.% Phosphat, 25 Gew.% $\gamma$-$Al_2O_3$
b) 50 Gew.% Phosphat, 50 Gew.% $\gamma$-$Al_2O_3$
c) 25 Gew.% Phosphat 75 Gew.% $\gamma$-$Al_2O_3$

Diese so hergestellten erfindungsgemäßen Katalysatorschutzeinheiten wurden jeweils den Katalysatortypen der Beispiele 5 und 8 in einem separaten Gehäuse vorgeschaltet. Die für die Katalysatoren eingesetzte Länge des strukturellen Verstärkers betrug ebenfalls 120 mm bei einem Durchmesser von 38 mm. Als aktive Beschichtung wurden für den Pt-Katalysator 0,33 g Pt/Teil und für den Pt/Rh-Katalysator 0,3 g Pt und 0,04 g Rh pro Teil verwendet. Die Nichtedelmetallbeladung war mit 36 g $\gamma$-$Al_2O_3$ 1,35 g $CeO_2$ und 1,7 g $ZrO_2$ für beide Katalysatoren die gleiche.

Die anwendungstechnische Prüfung auf ihre Funktionsfähigkeit bezüglich CO- und HC-Konvertierung erfolgte wie in Beispiel 7, aber unter folgenden geänderten Bedingungen:
- Raumgeschwindigkeit 82 000 h$^{-1}$ (Vorschalteinheit) 82 000 h$^{-1}$ (Katalysator)
- Testtemperatur 630° C

Die Ergebnisse nach 150 h Motoralterung sind in Tabelle 3 enthalten.

**Tabelle 3**

| Beispiel | Konvertierung % | | | |
|---|---|---|---|---|
| | Pt-Katalysator | | Pt/Rh-Katalysator | |
| | CO | HC | CO | HC |
| 9 a | 98 | 55 | 98 | 52 |
| 9 b | 98 | 48 | 98 | 43 |
| 9 c | 98 | 46 | 98 | 40 |

**Beispiel 10**

Mehrere wabenförmige strukturelle Verstärker aus Cordierit mit einer Länge von 152 mm und einem Durchmesser von 38 mm mit 62 Zellen/cm$^2$ (0,174 dm$^3$) wurden wie in Beispiel 1 mit $\gamma$-$Al_2O_3$ und 1,73 g $CeO_2$ und 2,16 g $ZrO_2$ beschichtet und durch Imprägnieren mit der wäßrigen $H_2PtCl_6$-Lösung mit 0,43 g Platin versehen. Die $\gamma$-$Al_2O_3$-Menge wurde allerdings, wie weiter unten beschrieben, variiert. Nach der Fertigstellung des Katalysators wurde auf diesem als letzte Schicht einmal Aluminiumphosphat und zum anderen ein $\gamma$-$Al_2O_3$/Aluminiumphosphat-Gemisch entsprechend Beispiel 2 abgeschieden und anschließend bei 250° C getrocknet. Die Abscheidung der Phosphatschicht im ersteren Falle erfolgte aus einer 30 Gew.%igen wäßrigen Aluminiumphosphatdispersion, hergestellt durch 24-stündiges Mahlen von basischem Aluminiumphosphat (Merck Nr. 1098) in einer Kugelmühle. Folgende Kombinationen wurden verwendet, wobei sich die Gewichtsangaben der einzelnen Komponenten jeweils auf 1 dm$^3$ des strukturellen Verstärkers beziehen:
a) 250 g $\gamma$-$Al_2O_3$ (enthält das Edelmetall)
0 g Phosphat
b) 187,5 g $\gamma$-$Al_2O_3$
62,5 g Phosphat
c) 125 g $\gamma$-$Al_2O_3$
125 g Phosphat

7

d) 62,5 g γ -Al$_2$O$_3$
187,5 g Phosphat
e) 187,5 g γ -Al$_2$O$_3$
62,5 g Mischung entsprechend Beispiel 2.

Jedes der so hergestellten Systeme wurde wie in Beispiel 9 über 100 Stunden am Motor gealtert und auf seine Funktionsfähigkeit bezüglich CO- und HC-Konvertierung getestet.

Die Raumgeschwindigkeit betrug 64 OOD h—¹. Die Ergebnisse nach 100 Stunden Alterung am Motor sind in Tabelle 4 enthalten:

**Tabelle 4**

| Beispiel | Konvertierung | |
|---|---|---|
| | % CO | % HC |
| 10 a | 65 | 17 |
| 10 b | 85 | 39 |
| 10 c | 73 | 38 |
| 10 d | 61 | 33 |
| 10 e | 90 | 44 |

**Beispiel 11**

Wabenförmige strukturelle Verstärker aus Cordierit mit den Abmessungen 38 mm Durchmesser und 152 mm Länge (0,174 dm³) und 62 Zellen/cm² wurden verfahrensmäßig wie in Beispiel 1-mit 43 g eines Washcoat,bestehend aus einer Mischung aus γ -Al$_2$O$_3$ und Aluminiumphosphat verschiedener Mischungsverhältnisse sowie jeweils 1,73 g CeO$_2$ und 2,16 g ZrO$_2$ belegt. Anschließend erfolgte eine Imprägnierung mit der wäßrigen H$_2$PtCl$_6$-Lösung entsprechend 0,43 g Pt pro Teil, ebenfalls wie in Beispiel 1 beschrieben. Folgende Washcoat-Kombinationen wurden verwendet, wobei sich die Gewichtsangaben der einzelnen Komponenten jeweils auf 1 dm³ des strukturellen Verstärkers beziehen:
a) 250 g γ-Al$_2$O$_3$
0 g Phosphat
b) 125 g γ -Al$_2$O$_3$
125 g Phosphat
c) 187,5 g γ -Al$_2$O$_3$
62,5 g Phosphat

Die so hergestellten Katalysatoren wurden wie in Beispiel 9 bei einer Raumgeschwindigkeit von 64 000 h $^{-1}$ über 100 Stunden am Motor gealtert und anschließend auf ihre Funktionsfähigkeit bezüglich CO- und HC-Konvertierung getestet. Es ergaben sich folgende Umsätze:
a) CO = 61 % HC = 15 %
b) CO = 87 % HC = 25
c) CO = 84 % HC = 21 %

**Beispiel 12**

Ein wabenförmiger, keramischer struktureller Verstärker aus Cordierit mit 62 Zellen/cm², einer Länge von 76 mm und einem Durchmesser von 38 mm wurde mit einer 40 Gew. %igen wäßrigen Lösung von γ -Al$_2$O$_3$, welche 3,7 Gew.% CeO$_2$ und 4,6 Gew.% ZrO$_2$ bezogen auf den Feststoffanteil, enthielt, mehrfach durchspült, zwischen den einzelnen Spülvorgängen bei 250 C getrocknet und dabei mit 21,75 g γ -Al$_2$O$_3$, 0,8 g CeO$_2$ und 1,0 g ZrO$_2$ belegt. Anschließend wurde der so vorbereitete Verstärker für 2 Stunden bei 700°.C getempert. Nach dem Abkühlen erfolgte die Edelmetallimprägnierung mit der wäßrigen Lösung von H$_2$PtCl$_6$ und die Weiterverarbeitung wie in Beispiel 1. Der Katalysator enthielt dann 0,22 g Pt.

Nach dem erfindungsgemäßen Verfahren wurde der vorbereitete Monolithkatalysator mit einem keramischen wabenförmigen Cordieritträgerkörper mit gleichen Abmessungen wie der strukturelle Verstärker des Katalysators, welcher mit einer $\gamma$-$Al_2O_3$/Aluminiumphosphat-Beschichtung von insgesamt 21,75 g gemäß Beispiel 6 belegt war, so zu einer 152 mm langen Einheit in einem gemeinsamen Gehäuse mit Gaszu- und Abflußkanal aneinandergefügt, daß der Trägerkörper mit der Phosphatbeschichtung, d. h. der Katalyssatorschutz, an der Abgaseingangsseite der Einheit plaziert war.

**Beispiel 13**

Wie im Beispiel 12 wurde ein Platinkatalyssator hergestellt. Die Länge des keramischen strukturellen Verstärkers betrug aber hier 152 mm und dementsprechend wurden alle im Beispiel 12 für den Katalysator angegebenen Gewichtsmengen verdoppelt.

**Beispiel 14**

Die nach Beispiel 12 und 13 hergestellten Einheiten wurden entsprechend dem Beispiel 7 mit folgenden veränderten Parametern gealtert und getestet:
- Raumgeschwindigkeit für Katalysator
a) Beispiel 12: 128 000 h$-^1$
b) Beispiel 13: 64 000 h$-^1$
- Motoralterung: 100 h
- Testtemperatur: 630° C
Nach Abschluß der Alterung ergaben sich folgende Konvertierungen für HC und CO:

| | % CD | % HC |
|---|---|---|
| erfindungsgemäß geschützter Katalysator gem. Beispiel 12 | 96 | 34 |
| ungeschützter Katalysator nach Beispiel 13 | 84 | 21 |

Trotz der doppelten Edelmetallmenge und des doppelten Volumens des ungeschützten Katalysators nach Beispiel 13 im Vergleich zum erfindungsgemäß geschützten Katalysator des Beispiels 12 lieferte das Beispiel 12 nach dem Alterungszyklus eine wesentlich höhere HC- und CD-Konvertierung.

**Patentansprüche**

1. Verfahren zum Schutz von Katalysatoren für die Reinigung der Abgase von mit verbleiten Kraftstoffen betriebenen Verbrennungskraftmaschinen durch Inberührungbringen der Abgase, ehe sie mit dem Katalysator in Berührung kommen, mit einem Phosphat oder einem dieses enthaltenden temperaturbeständigen oxidischen Trägermaterial, wobei das Phosphat bzw. das Phosphat mit dem Trägermaterial in Form einer aus einer Dispersion gebildeten Beschichtung auf einem Trägerkörper vorliegt, dadurch gekennzeichnet, daß als Phosphat Aluminiumphosphat verwendet wird.

2. Verfahren zum Schutz von Katalysatoren für die Reinigung der Abgase von mit verbleiten Kraftstoffen betriebenen Verbrennungskraftmaschinen durch Inberührungbringen der Abgase, ehe sie mit dem Katalysator in Berührung kommen, mit Aluminiumphosphat oder einem dieses enthaltenden temperaturbeständigen oxidischen Trägermaterial in Form eines Granulats oder Preßlings.

3. Verfahren nach Anspruch 1, dadurch gekennzeichnet, daß ein mit Aluminiumphosphat und gegebenenfalls einem temperaturbeständigen oxidischen Trägermaterial beschichteter Trägerkörper aus keramischem Material oder aus temperatur- und korrosionsbeständigem Metall oder einer Metall-Legierung mit diesen Eigenschaften verwendet wird.

4. Verfahren nach Anspruch 1 oder 3, dadurch gekennzeichnet, daß der Trägerkörper seinerseits mit einer oberflächen-vergrößernden Metalloxidschicht, vorzugsweise einem Aluminiumoxid der Übergangsreihe oder $SiO_2$, Aluminiumsilikat, $TiO_2$, $ZrO_2$, einem Oxid der Seltenen Erden oder Mischungen vorstehender Stoffe, überzogen ist.

5. Verfahren nach Anspruch 3 oder 4, dadurch gekennzeichnet, daß der Trägerkörper in Form einer längs und/oder querdurchströmbaren Metallmatrix oder eines keramischen Monolithen mit entsprechender Durchströmbarkeit ausgebildet ist.

6. Verfahren nach den Ansprüchen 1- 5, dadurch gekennzeichnet, daß das Aluminiumphosphat bzw. das Aluminiumphosphat mit dem Trägermaterial auf der katalytisch aktiven Beschichtung eines Katalysators, vorzugsweise eines Trägerkatalysators, aufgebracht ist.

7. Verfahren nach Anspruch 6, <u>dadurch gekennzeichnet</u>, daß die katalytisch aktive Beschichtung auf einem gegebenenfalls mit einer oberflächenvergrößernden Metalloxidschicht überzogenen strukturellen Verstärker in Form einer Metallmatrix oder eines Keramikmonolithen aufgebracht ist.

8. Verfahren nach Anspruch 7, <u>dadurch gekennzeichnet</u>, daß das Aluminiumphosphat bzw. das Aluminiumphosphat mit dem Trägermaterial nur in einem vom Abgas angeströmten vorderen Abschnitt des Katalysators aufgebracht ist.

9. Verfahren nach den Ansprüchen 1 sowie 3 - 5, <u>dadurch gekennzeichnet</u>, daß das Aluminiumphosphat bzw. das Aluminiumphosphat mit dem Trägermaterial in einem vom Abgas angeströmten, aber von katalytisch aktiver Beschichtung freigehaltenen und gegebenenfalls mit einer oberflächenvergrößernden Metalloxidschicht überzogenen vorderen Abschnitt eines gegebenenfalls mehrteiligen strukturellen Verstärkers in Form einer Metallmatrix oder eines Keramikmonolithen aufgebracht ist, wobei der hintere Abschnitt den Katalysator trägt.

10. Verfahren nach den Ansprüchen 1 - 9, <u>dadurch gekennzeichnet</u>, daß man die Abgase durch ein erstes, mit Zu- und Abströmkanal für das Abgas ausgerüstetes Gehäuse führt, in dessen Strömungsquerschnitt eines der vorgesehenen Katalysatorschutzsysteme bzw. ein damit ausgerüsteter Katalysator angeordnet ist und sie anschließend durch ein entsprechend ausgebildetes zweites Gehäuse führt, in dessen Strömungsquerschnitt ein Abgasreinigungskatalysator angeordnet ist.

## Claims

1. A process for protecting catalysts for purifying the exhaust gases of combustion engines operated with leaded fuel by bringing the exhaust gases into contact, before they come into contact with the catalyst, with a phosphate or a heat-resistant oxidic carrier material containing phosphate, whereby the phosophate or the phosphate with the carrier material is present in the form of a coating on a carrier body formed from a dispersion, characterised in that aluminium phosphate is used as the phosphate

2. A process for protecting catalysts for purifying the exhaust gases of combustion engines operated by leaded fuels by bringing the exhaust gases into contact before they come into contact with the catalyst, with aluminium phosphate or a heat resistant oxidic carrier material containing alumnium phosphate in the form of a granulate or mouldings.

3. A process accordine to claim 1, characterised in that a carrier body is used which is coated with aluminium phosphate and optionally a heat-resistant oxidic carrier material, and consists of ceramic material or heat and corrosion-resistant metal or a metal alloy with these properties.

4. A process according to claim 1 or 3 characterised in that the carrier body is itself coated with a surfaceenlarging metal oxide layer, preferably an aluminium oxide of the transition series or $SiO_2$, aluminium silicate $TiO_2$ $ZrO_2$ an oxide of the rare earths or mixtures of the above materials,

5. A process according to claim 3 or 4, characterised in that the carrier body is in the form of metal matrix with longitudinal and/or transverse through-flow capacity or a ceramic monolith with corresponding through-flow capacity.

6. A process according to claims 1 to 5, characterised in that the aluminium phosphate or the aluminium phosphate with the carrier material is applied on the catalytically-active coating of a catalyst preferably a carrier catalyst.

7. A process according to claim 6 characterised in that a catalytically-active coating is applied to a structural strengthening member optionally coated with a surface-enlarging metal oxide layer and which is in the form of a metal matrix or a ceramic monolith.

8. A process according to claim 7 characterised in that the aluminium phosphate or the aluminium phosphate with the carrier material is only applied in a front section of the catalyst against which the exhaust gas flows.

9. A process according to claims 1 and 3 to 5, characterised in that the aluminium phosphate or the aluminium phosphate with the carrier material is applied in a front section of an optionally multipart structural strengthening member in the form of a metal matrix or a ceramic monolith, against which section exhaust gas flows, but is kept free from catalytically-active coating and is optionally coated with a surface-enlarging metal oxide layer with the rear section carrying the catalyst.

10. A process according to claims 1 to 9, characterised in that the exhaust gases are passed through a first housing equipped with inlet and outlet channels for the exhaust gas, a catalyst protection system as defined or a catalyst equipped therewith being arranged in the flow cross-section thereof, and they are then passed through a correspondingly formed secomd housing, an exhaust gas purification catalyst being arranged in the flow cross-section thereof.

## Revendications

1°) Procéde pour la protection de catalyseurs destines à l'epuration des gaz d'echappement des moteurs à combustion interne, fonctionnant avec un carburant additionné de plomb, par mise en contact des gaz d'échappement, avant qu'ils n'entrent en contact avec le catalyseur, avec un phosphate ou une matière de support en contenant, oxydée, résistant à la chaleur, le phosphate, ou le phosphate et la matière qui le porte, se présentant sous la forme d'un revetement d'une pièce de support, formé à partir d'une dispersion, procédé caractérisé en ce que l'on utilise, comme phosphate, le phosphate d'aluminium.

2°) Procédé pour la protection de catalyseurs pour l'épuration des gaz d'échappement de moteurs à combustion interne fonctionnant avec un carburant additionné de plomb, pour la mise en contact des gaz d'échappement, avant qu'ils n'entrent en contact avec le catalyseur, avec du phosphate d'aluminium ou une matière de support en contenant, oxydée, résistant à la chaleur, ayant la forme d'un granulat ou de pièces pressées.

3°) Procédé suivant la revendication 1, caractérisé en ce que l'on utilise une pièce de support, recouverte de phosphate d'aluminium et éventuellement d'une matière de support résistant à la chaleur, faite de matériaux céramiques ou d'un métal résistant à la chaleur et à la corrosion ou d'un alliage de métaux ayant ces proprietes.

4°) Procédé suivant la revendication 1 ou 3, caractérisé en ce que la pièce de support de son côté, est revetue d'une couche d'oxyde métallique agrandissant sa surface, de préférence un oxyde d'aluminium de la série de transition, ou $SiO_2$, silicate d'aluminium, $TiO_2$, $ZrO_2$, un oxyde des terres rares, ou des mélanges des matières mentionnées ci-dessus.

5°) Procédé suivant la revendication 3 ou 4, caractérisé en ce que la pièce de support peut avoir la forme d'une matrice métallique qui peut être parcourue soit longitudinalement, soit transversalement, ou d'un monolithe céramique d'une perméabilité appropriée aux gaz.

6°) Procédé suivant les revendications 1 à 5, caractérisé en ce que le phosphate d'aluminium, ou le phosphate d'aluminium avec sa matière de support, est posé sur l'enduit catalytiquement actif d'un catalyseur de préférence d'un catalyseur sur support.

7°) Procédé suivant la revendication 6, caractérisé en ce que la surface de revetement catalytiquement active est appliquée sur un renforçateur structurel recouvert éventuellement d'une couche d'oxyde métallique augmentant la surface ayant la forme d'une matrice métallique ou d'un monolithe céramique.

8°) Procédé suivant la revendication 7, caractérisé en ce que le phosphate d'aluminium, ou le phosphate d'aluminium avec la matière de support est posé seulement dans une partie avant du logement du catalyseur parcourue par le gaz d'échappement.

9°) Procédé suivant les revendications 1 ainsi que 3 à 5, caractérisé en ce que le phosphate d'aluminium, ou le phosphate d'aluminium avec la matière de support est placé dans une portion avant d'un renforçateur structurel se composant éventuellement des plusieurs parties, ayant la forme d'une matrice métallique, ou d'un monolithe céramique parcouru par le gaz d'échappement, maintenue exempte de revetement catalytiquement actif, et revetue, éventuellement d'une couche d'oxyde métallique augmentant la surface, la section arrière portant le catalyseur.

10°) Procédé suivant les revendications 1 à 9, caractérisé en ce que l'on envoit les gaz d'échappement dans un premier boîtier pourvu de canaux d'arrivée et de départ du gaz d'échappement, dans la section d'écoulement duquel est placé un des systèmes prévus protecteurs du catalyseur, ou un catalyseur qui en est pourvu, et les envoie ensuite dans un second boîtier réalisé de façon correspondante, dans la section d'écoulement duquel est placé un catalyseur d'épuration du gaz d'échappement.

**Fig. 1a**

**Fig. 1b**

0 082 262

**Fig. 2a**

**Fig. 2b**